# EUROPÄISCHE PATENTSCHRIFT

(11) **EP 1 926 011 B1**
(45) Veröffentlichungstag und Bekanntmachung des Hinweises auf die Patenterteilung: **27.01.2016**
(21) Anmeldenummer: 07114588.2
(22) Anmeldetag: 20.08.2007
(51) Int. Cl.: G02B 21/24, G02B 21/36

(54) **Steuermodul und Steuersystem zur Beeinflussung von Probenumgebungsparametern eines Inkubationssystems, Verfahren zur Steuerung einer Mikroskopanordnung und Computerprogrammprodukt**
Control module and control system for influencing sample environment parameters of an incubation system, method for actuating a microscope assembly and computer program product
Module et système de commande destinés à influencer des paramètres d'environnements d'échantillons d'un système d'incubation, procédé de commande d'un agencement de microscope et produit de programme informatique

(30) Priorität: 20.09.2006 DE 102006044091
(43) Veröffentlichungstag der Anmeldung: 28.05.2008
(73) Patentinhaber: Carl Zeiss Microscopy GmbH, 07745 Jena (DE)
(72) Erfinder: Schaffer, Jörg, 37085 Göttingen (DE); Wehner, Eugen, 37073 Göttingen (DE)
(74) Vertreter: Banzer, Hans-Jörg

(56) Entgegenhaltungen:
- WO-A2-2005/095576
- DE-A1-102005 036 763

## Beschreibung

Die vorliegende Erfindung betrifft ein Steuermodul und Steuersystem zur Beeinflussung von Probenumgebungsparametern eines Inkubationssystems, ein Verfahren zur Steuerung einer Mikroskopanordnung sowie ein Computerprogrammprodukt. Insbesondere betrifft die vorliegende Erfindung derartige Vorrichtungen und Verfahren, mit welchen ein Probenumgebungsparameter in einem Probenraum eines Mikroskopsystems beeinflusst werden kann.

Zur Beobachtung von biologischem Probenmaterial, wie beispielsweise Zellkulturen, können Mikroskopsysteme mit Inkubationssystemen kombiniert werden, wobei das Inkubationssystem dazu dient, einen oder mehrere Parameter einer Umgebung des Probenmaterials und somit die Bedingungen für das Probenmaterial zu kontrollieren. Beispiele für derartige zu kontrollierende Probenumgebungsparameter umfassen einen Sauerstoffgehalt, einen Kohlenstoffdioxidgehalt, eine Luftfeuchtigkeit und eine Temperatur der die Probe umgebenden Atmosphäre. Ein Vorteil einer derartigen Kontrolle von Probenumgebungsparametern besteht darin, dass Bedingungen hergestellt werden, welche für ein längeres Überleben des biologischen Probenmaterials geeignet sind, was wiederum eine längere Beobachtung der Probe ermöglicht, und/oder dass Experimente durchgeführt werden können, mit welchen die Reaktion des biologischen Probenmaterials auf-bestimmte Umwelteinflüsse gezielt untersucht werden kann.

Zur Beeinflussung oder Steuerung von Umgebungsparametern einer Probe einer Mikroskopanordnung sind Steuergeräte bekannt, mit welchen ein einzelner oder typischerweise mehrere Probenumgebungsparameter kontrolliert oder gesteuert werden. Derartige Steuergeräte sind jedoch herkömmlich so ausgestaltet, dass sie manuell bedient werden können, wozu Tastenfelder, Drehknöpfe oder ähnliche Einrichtungen vorgesehen sind, über welche ein Benutzer den Probenumgebungsparameter einstellt. Ein Problem, welches mit derartigen herkömmlichen Steuergeräten verknüpft ist, besteht darin, dass ein menschlicher Benutzer tätig werden muss, um einen Probenumgebungsparameter zu verändern, sowie möglicherweise den aktuellen Wert des Probenumgebungsparameters zu protokollieren, was für eine spätere Auswertung des mit der Mikroskopanordnung erfassten Datenmaterials von Wichtigkeit ist. Eine auch nur weitgehende Automatisierung von Experimentabläufen ist mit derartigen herkömmlichen Steuergeräten nicht gewährleistet.

Ein weiteres Problem von herkömmlichen Steuergeräten zur Beeinflussung von Probenumgebungsparametern besteht darin, dass sie häufig ausgestaltet sind, um mehrere Probenumgebungsparameter gleichzeitig zu steuern, d. h. dass sie mehrere Steuergrößen aufweisen. Diese Zusammenfassung mehrerer Steuerfunktionen in einem einzigen Steuergerät bewirkt häufig, dass das Steuergerät nur für Inkubationssysteme mit einer bestimmten Inkubatorgröße verwendet werden kann, so dass ein Benutzer für unterschiedliche Inkubationssysteme auf unterschiedliche Steuergeräte zurückgreifen muss.

Die WO 2007/014727 A, die Stand der Technik nach Art. 54(3) EPÜ ist, beschreibt ein System aus mehreren Inkubatoren. Die Probenkammer ist jeweils im Inneren des Inkubators angeordnet. Die mehreren Inkubatoren weisen jeweils eine Steuerelektronik auf. Die Inkubatoren weisen jeweils ein Bussystem auf. Anschlusselemente sind an dem Gehäuse der Inkubatoren so vorgesehen, dass eine Verbindung der Inkubatoren ohne separate Verbindungselemente möglich ist. Über die Bussystemarchitektur ist ein invididuelles Ansteuern sämtlicher Inkubatoren möglich.

Der vorliegenden Erfindung liegt die Aufgabe zu Grunde, verbesserte Vorrichtungen und Verfahren zur Beeinflussung von Probenumgebungsparametern in einem Inkubationssystem zur Verfügung zu stellern. Insbesondere liegt der vorliegenden Erfindung die Aufgabe zu Grunde, derartige Vorrichtungen und Verfahren für ein Inkubationssystem zur Verfügung zu stellen, welches als Bestandteil einer Mikroskopanordnung verwendet werden kann, und welche eine weitgehende Automatisierung von Experimentabläufen ermöglichen. Weiter liegt der vorliegenden Erfindung insbesondere die Aufgabe zu Grunde, derartige Vorrichtungen und Verfahren zur Verfügung zu stellen, welche für Inkubationssysteme mit Inkubatoren verschiedener Größe verwendet werden können.

Erfindungsgemäß wird diese Aufgabe gelöst durch ein Steuergerät zur Beeinflussung eines Probenumgebungsparameters, ein Steuersystem zur Beeinflussung einer Mehrzahl von Probenumgebungsparametern und einem Verfahren zur Steuerung einer Mikroskopanordnung, wie sie in den unabhängigen Ansprüchen definiert sind. Die abhängigen Ansprüche definieren bevorzugte oder vorteilhafte Ausführungsbeispiele der Erfindung.

Ein erfindungsgemäßes Steuermodul zur Beeinflussung eines Probenumgebungsparameters eines Inkubationssystems umfasst eine Schnittstelleneinheit, welche im Gebrauch mit einem Bus zu koppeln ist, zum Empfangen eines Steuerbefehls, eine Steuereinrichtung, die mit der Schnittstelleneinheit gekoppelt und eingerichtet ist, um in Abhängigkeit von dem Steuerbefehl den Probenumgebungsparameter zu beeinflussen, und eine weitere Schnittstelleneinheit, welche mit der Schnittstelleneinheit gekoppelt ist und über welche der empfangene Steuerbefehl, wieder ausgegeben wird. Das Steuermodul umfasst eine Luftaustrittsöffnung zum Abgeben von in eine Probenumgebung zu leitender Luft sowie eine Lufteintrittsöffnung zum Empfangen der in die Probenumgebung zu leitenden Luft. Das Steuermodul ist eingerichtet, um den Probenumgebungsparameter durch Beeinflussung der in die Probenumgebung zu leitenden Luft zu beeinflussen.

Vorteile dieser Ausgestaltung bestehen darin, dass das Steuermodul über die Schnittstelleneinheit beispielsweise von einem

Computersystem angesteuert werden kann, was eine Automatisierung eines Experimentablaufs ermöglicht, wobei dadurch, dass eine weitere Schnittstelleneinheit zum Wiederausgeben des Steuerbefehls vorgesehen ist, ein Abschnitt des Bussystems, über welchen das Steuermodul angesteuert wird, als integrierter Bestandteil des Steuermoduls ausgebildet ist. Diese modulare Ausgestaltung ermöglicht eine einfache Kombinierbarkeit verschiedener Steuermodule.

Bevorzugt ist die Steuereinrichtung eingerichtet, um den Steuerbefehl dahingehend auszuwerten, dass sie ermittelt, ob der Steuerbefehl an das Steuermodul adressiert ist. Nur falls der Steuerbefehl an das Steuermodul adressiert ist, wird die Steuereinrichtung gemäß dem Steuerbefehl tätig, um den Probenumgebungsparameter zu beeinflussen. Dadurch wird es möglich, dass eine Mehrzahl derartiger Steuermodule miteinander zu einem Bussystem verkoppelt und über ein einheitliches Busprotokoll angesteuert wird.

Unter einem einheitlichen Busprotokoll wird hierbei ein Busprotokoll verstanden, mit welchem die Steuermodule auf der Anwendungsschicht, d.h. auf der obersten Schicht nach dem OSI-Schichtenmodell, auf eine einheitliche Weise angesteuert werden können.

Bevorzugt enthält der Steuerbefehl einen Sollwert für den Probenumgebungsparameter, welcher von der Steuereinrichtung ermittelt und in Speichermitteln gespeichert wird. Der Probenumgebungsparameter wird dann von der Steuereinrichtung derart beeinflusst, dass er den Sollwert oder einen Wert nahe an dem Sollwert erreicht. In den Speichermittel kann beispielsweise auch ein Ist-Wert des Probenumgebungsparameters abgelegt werden, welcher von einem Sensor in einer Probenumgebung oder in dem Steuermodul ermittelt wird. Der Ist-Wert kann über die Schnittstelleneinheit ausgegeben werden, was eine Protokollierung des Experimentablaufs, beispielsweise durch einen Computer, ermöglicht.

Der Probenumgebungsparameter kann insbesondere ein Parameter einer die Probe umgebenden Atmosphäre sein, wie beispielsweise ein Sauerstoffgehalt, ein Kohlenstoffdioxidgehalt, eine Luftfeuchtigkeit oder eine Lufttemperatur der die Probe umgebenden Luft. Der Probenumgebungsparameter kann beispielsweise auch die Temperatur eines Probenhalters sein. Das Steuermodul umfasst zusätzlich zu der Luftaustrittsöffnung zum Abgeben des in eine Probenumgebung zu leitenden Luftstroms auch eine Lufteintrittsöffnung, wobei der Luftstrom von der Lufteintrittsöffnung zu der Luftaustrittsöffnung durch das Steuermodul geführt und dort beeinflusst wird. Um zu gewährleisten, dass verschiedene derartige

Steuermodule einfach kombiniert werden können, sind die Lufteintrittsöffnung und die Luftaustrittsöffnung bevorzugt derart ausgestaltet, dass eine Luftverbindung für die in die Probenumgebung zu leitende Luft einfach dadurch hergestellt werden kann, dass Seitenflächen verschiedener Steuermodule miteinander in Kontakt gebracht werden. Insbesondere sind zu diesem Zweck bevorzugt die Lufteintrittsöffnung und die Luftaustrittsöffnung an entgegengesetzten Seiten eines Gehäuses des Steuermoduls vorgesehen, und die Lufteintrittsöffnung und die Luftaustrittsöffnung weisen komplementäre Verbindungsabschnitte auf, so dass die Lufteintrittsöffnung eines Steuermoduls direkt mit der Luftaustrittsöffnung eines anderen, identisch ausgebildeten Steuermoduls in Eingriff gebracht werden kann. Ähnlich sind bevorzugt auch die Schnittstelleneinheit und die weitere Schnittstelleneinheit derart ausgebildet, dass die Schnittstelleneinheit eines Steuermoduls mit der weiteren Schnittstelleneinheit eines anderen Steuermoduls direkt gekoppelt werden kann, indem das Steuermodul und das zweite Steuermodul an Seitenflächen derselben miteinander in Berührung gebracht werden, beispielsweise, indem das Steuermodul und das weitere Steuermodul aufeinander gestapelt oder nebeneinander angeordnet werden.

Ein erfindungsgemäßes Steuersystem zur Beeinflussung einer Mehrzahl von Probenumgebungsparametern eines Inkubationssystems umfasst einen Bus zur Übertragung eines Steuerbefehls, eine Mehrzahl von Steuermodulen mit jeweils einer mit dem Bus gekoppelten Schnittstelleneinheit zum Empfangen des Steuerbefehls, wobei jedes Steuermodul der Mehrzahl von Steuermodulen eine mit der jeweiligen Schnittstelleneinheit gekoppelte Steuereinrichtung umfasst. Die Steuereinrichtung ist jeweils eingerichtet, um einen der Mehrzahl von Probenumgebungsparametern in Abhängigkeit von dem Steuerbefehl zu beeinflussen. Das erfindungsgemäße Steuersystem ermöglicht eine Ansteuerung einer Mehrzahl von Steuermodulen und damit die Beeinflussung einer Mehrzahl von Probenumgebungsparametern über einen einzigen Bus, mit welchem die Steuermodule gekoppelt sind. Die Steuereinrichtung jedes Steuermoduls ist bevorzugt eingerichtet, um den Steuerbefehl auszuwerten und so zu ermitteln, ob der Steuerbefehl an das zugehörige Steuermodul adressiert ist. Die Steuermodule können insbesondere als erfindungsgemäße Steuermodule ausgestaltet sein. Die Steuermodule können aufeinander gestapelt oder seitlich nebeneinander angeordnet sein, um so das Steuersystem auszubilden.

Vorteilhaft ist ein Steuermodul oder sind mehrere Steuermodule des Steuersystems eingerichtet, um einen Ist-Wert des jeweiligen Probenumgebungsparameters von einem Sensor, welcher in einer Probenumgebung oder im Steuermodul vorgesehen ist, zu speichern, wobei die Funktion des jeweiligen Steuermoduls in Abhängigkeit von dem Ist-Wert angepasst werden kann.

Wie bereits oben dargestellt, kann bei dem erfindungsgemäßen Steuermodul ein Abschnitt eines Busses als integrierter Bestandteil des Steuermoduls ausgebildet sein. Bevorzugt wird eine elektrische Kopplung zwischen verschiedenen Steuermodulen des Steuersystems, welche zur Weiterleitung des Steuerbefehls nötig ist, dadurch eingerichtet, dass die Schnittstelleneinheit bzw. die weitere Schnittstelleneinheit zweier benachbarter Steuermodule des Steuersystems gekoppelt werden, indem Seitenflächen der benachbarten Steuermodule in Berührung miteinander gebracht werden, beispielsweise indem die Steuermodule aufeinander gestapelt oder nebeneinander angereiht werden.

Falls mehrere oder alle der Steuermodule des Steuersystems Probenumgebungsparameter durch Beeinflussung von in eine Probenumgebung zu leitender Luft beeinflussen, wird bevorzugt weiterhin auch eine Luftverbindung zwischen benachbarten Steuermodulen dadurch hergestellt, dass diese aufeinander gestapelt oder aneinander gereiht werden. Alternativ können jedoch auch separate Luftverbindungsstücke, beispielsweise in der Form von Schläuchen, verwendet werden, um einen Austausch von Luft zwischen verschiedenen Steuermodulen zu ermöglichen.

Bevorzugt sind die Steuergrößen der Mehrzahl von Steuermodulen paarweise verschieden, d. h. die Steuergröße jedes beliebigen Steuermoduls der Mehrzahl von Steuermodulen ist von den Steuergrößen aller anderen Steuermodule verschieden.

Der Bus kann ein serieller Bus sein, wobei ein Busprotokoll des Busses ausgewählt sein kann aus einer Gruppe umfassend ein CAN-Protokoll, ein RS232-Protokoll und ein USB-Protokoll. Der Bus kann jedoch auch ein paralleler Bus sein.

Das Steuersystem kann vorteilhaft mit einem Mikroskopsystem zu einer Mikroskopanordnung kombiniert werden. Dabei beeinflusst das Steuersystem eine Mehrzahl von Probenumgebungsparametern in einem Probenraum, in welchem eine mit dem Mikroskopsystem zu beobachtende Probe unterzubringen ist. Wenn das Mikroskopsystem ebenfalls eine ansteuerbare Komponente umfasst, ist diese bevorzugt über eine Schnittstelleneinheit mit dem Bus gekoppelt, mit welchem auch die Steuermodule des Steuersystems gekoppelt sind. Dadurch wird es möglich, sowohl die ansteuerbare Komponente des Mikroskopsystems als auch jedes der Steuermodule des Steuersystems über den Bus anzusteuern. Weiter bevorzugt werden die Steuerbefehle von einem elektronischen Rechnersystem über den Bus ausgegeben, so dass sowohl die ansteuerbare Komponente des Mikroskopsystems als auch die verschiedenen Steuermodule mit Hilfe des elektronischen Rechnersystems angesteuert werden können. Die Steuermodule können wiederum eingerichtet sein, um einen in einer Probenumgebung oder in dem Steuermodul mit einem Sensor ermittelten Ist-Wert des Probenumgebungsparameters zu speichern, wobei die Funktion des Steuermoduls in Abhängigkeit von dem Ist-Wert angepasst werden kann. Bei dieser Mikroskopanordnung ist somit die Kommunikation zwischen den verschiedenen beteiligten Komponenten, d. h. dem elektronischen Rechnersystem, dem Mikroskopsystem und dem Steuersystem zur Beeinflussung von Probenumgebungsparametern durch ein einheitliches Bussystem realisiert. Dies ermöglicht insbesondere eine einheitliche Ansteuerung sowohl des Mikroskopsystems als auch des Steuersystems durch das elektronische Rechnersystem über den Bus sowie ein automatisches Protokollieren verschiedener für einen Experimentverlauf relevanter Daten durch das elektronische Rechnersystem.

Es sollte sich verstehen, dass nicht nur ein Steuersystem mit einer Mehrzahl von Steuermodule, sondern auch ein einziges Steuermodul in Kombination mit einem Mikroskopsystem über ein einheitliches Bussystem angesteuert werden kann.

Erfindungsgemäß wird weiterhin ein Verfahren zur Steuerung einer Mikroskopanordnung mit einem Mikroskopsystem, das eine ansteuerbare Komponente aufweist, und mit einem Steuermodul zur Beeinflussung eines Probenumgebungsparameters eines Probencaums des Mikroskopsystems mit einem elektronischen Rechnersystem zur Verfügung gestellt. Das Verfahren umfasst ein Erzeugen eines Mikroskopsteuerbefehls zur Ansteuerung der ansteuerbaren Komponente des Mikroskopsystems, wobei der Mikroskopsteuerbefehl mit einer Adressinformation für die ansteuerbare Komponente versehen wird. Das Verfahren umfasst weiterhin ein Erzeugen eines Modulsteuerbefehls zur Ansteuerung des Steuermoduls, wobei der Modulsteuerbefehl mit einer Adressinformation für das Steuermodul versehen wird. Der Mikroskopsteuerbefehl und der Modulsteuerbefehl werden ausgegeben, um die ansteuerbare Komponente und das Steuermodul anzusteuern. Durch das Hinzufügen der Adressinformation für die ansteuerbare Komponente bzw. für das Steuermodul zu dem jeweiligen Steuerbefehl wird es möglich, die ansteuerbare Komponente des Mikroskopsystems und das Steuermodul über ein einheitliches Bussystem anzusteuern. Dabei bezeichnet der Begriff Adressinformation jedwede Art von Information, welche es erlaubt, das Steuermodul bzw. die ansteuerbare Komponente zu identifizieren, beispielsweise in der Form eines in dem Steuermodul bzw. der ansteuerbaren Komponente gespeicherten Hardwareidentifikationscodes in Form einer Zahlenfolge.

Der Modulsteuerbefehl kann insbesondere einen Sollwert für den Probenumgebungsparameter umfassen, welcher somit über das Bussystem in das Steuermodul geschrieben wird. Der Modulsteuerbefehl und/oder der Mikroskopsteuerbefehl kann in Abhängigkeit von einem Zeitablaufplan und einer überwachten Ablaufzeit automatisch erzeugt werden, um so einen Experimentverlauf automatisch zu führen. Das Verfahren kann weiterhin verschiedene Datenauswertungs- und Protokollierfunktionen umfassen, wie beispielsweise ein Speichern eines Ist-Werts des Probenumgebungsparameters als Funktion der Ablaufzeit durch das elektronische Rechnersystem oder ein Speichern von Bilddaten, die mit dem Mikroskopsystem aufgenommen wurden.

Ein erfindungsgemäßes Computerprogrammprodukt umfasst Anweisungen, welche so eingerichtet sind, dass bei ihrer Ausführung durch ein elektronisches Rechnersystem das elektronische Rechnersystem das erfindungsgemäße Verfahren zur Steuerung einer Mikroskopanordnung ausführt. Bevorzugt ermöglichen die Anweisungen des Computerprogrammprodukts bei ihrer Ausführung durch das elektronische Rechnersystem es einem Benutzer, mit einer einheitlichen Bedienoberfläche sowohl das Mikroskopsystem mit der ansteuerbaren Komponente als auch das Steuermodul zur Beeinflussung des Probenumgebungsparameters anzusteuern.

Das erfindungsgemäße Steuermodul und das erfindungsgemäße Steuersystem können bei jedem Inkubationssystem Anwendung finden, bei welchem ein Probenumgebungsparameter oder mehrere Probenumgebungsparameter zu steuern sind. Das erfindungsgemäße Steuermodul und das erfindungsgemäße Steuersystem können jedoch besonders vorteilhaft in Kombination mit einem Mikroskopsystem verwendet werden, um einen Probenumgebungsparameter oder mehrere Probenumgebungsparameter einer Probe, welche mit dem Mikroskopsystem zu beobachten ist, auf eine definierte Weise zu steuern. Bevorzugte Anwendungsgebiete des erfindungsgemäßen Verfahrens und des erfindungsgemäßen Computerprogrammprodukts sind mikroskopische Beobachtungen, bei welchen eine Automatisierung des Beobachtungs- oder Experimentverlaufs erüwnscht ist.

Nachfolgend werden bevorzugte Ausführungsbeispiele der Erfindung unter Bezugnahme auf die Figuren detailliert beschrieben.
Fig. 1 ist eine schematische Darstellung einer Mikroskopanordnung, welche ein Steuersystem nach einem Ausführungsbeispiel der vorliegenden Erfindung umfasst.
Fig. 2 ist eine schematische Darstellung eines Steuermoduls nach einem Ausführungsbeispiel der Erfindung.
Fig. 3 ist eine schematische Darstellung einer Kombination mehrerer Steuermodule von Fig. 2 zu einem Steuersystem.
Fig. 4 ist ein schematische Darstellung zur Veranschaulichung eines Luftstroms in einer Mikroskopanordnung nach einem weiteren Ausführungsbeispiel der Erfindung.
Fig. 5A und 5B sind schematische Darstellungen zur Veranschaulichung eines Luftstroms bei einer Mikroskopanordnung nach noch weiteren Ausführungsbeispielen der Erfindung.
Fig. 6 ist eine Flussdiagrammdarstellung für ein Verfahren nach einem Ausführungsbeispiel der Erfindung.

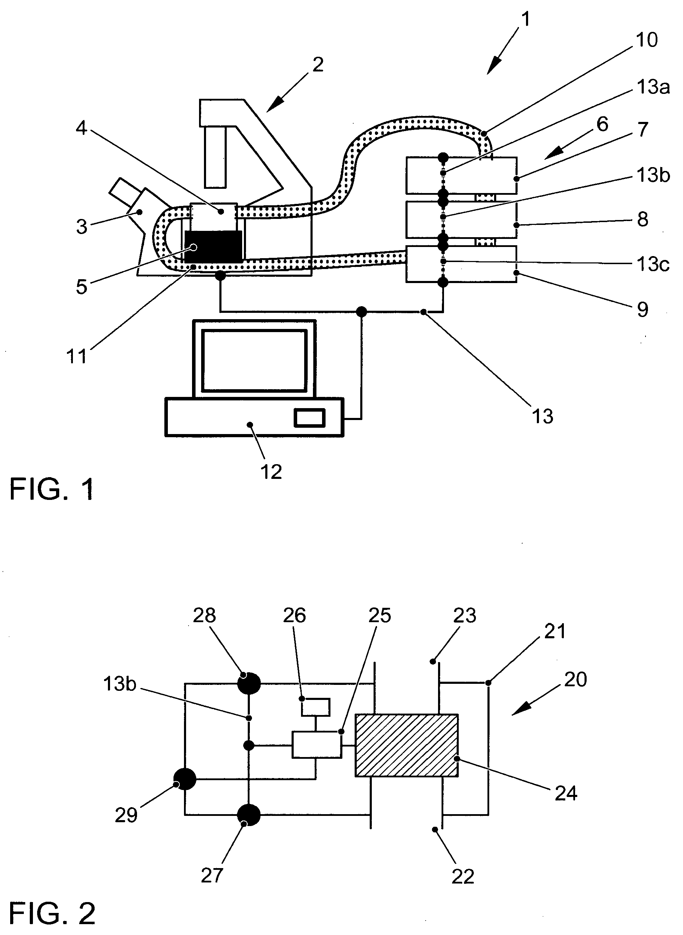

Fig. 1 zeigt eine erfindungsgemäße Mikroskopanordnung 1, welche ein Mikroskopsystem 2 und ein Steuersystem 6 zur Beeinflussung einer Mehrzahl von Probenumgebungsparametern für eine mit dem Mikroskopsystem 2 zu beobachtende Probe umfasst. Das Mikroskopsystem 2 umfasst ein Mikroskop 3, welches alle Standardkomponenten eines Mikroskops aufweisen kann und zur Beobachtung einer Probe in einem Probenraum 4 verwendet wird. Das Mikroskopsystem 2 umfasst weiterhin mindestens eine ansteuerbare Komponente 5. Die ansteuerbare Komponente 5 kann beispielsweise ein mit einem Motor verschiebbarer Objekttisch zur Positionierung der Probe in drei Raumrichtungen, eine Einrichtung zur Probenmanipulation, wie beispielsweise Perfusion, optische oder mechanische Pinzetten, eine Einrichtung zur Wirkstoffzuführung etc., oder eine Beleuchtungseinrichtung zur Beleuchtung der zu beobachtenden Probe umfassen, wobei beispielsweise das Spektrum oder die Intensität der Beleuchtungseinrichtung angesteuert und verändert werden kann. Die ansteuerbare Komponente 5 kann aber auch eine Einrichtung zur Bilderfassung sein, wie beispielsweise eine Kamera, die durch ein elektrisches Signal ausgelöst werden kann. Falls eine Mehrzahl von ansteuerbaren Komponenten an dem Mikroskopsystem vorgesehen ist, können diese simultan oder sequenziell angesteuert werden.

Das Steuersystem 6 dient zur Steuerung einer Mehrzahl von Parametern in dem Probenraum 4. Das Steuersystem 6, welches eine Mehrzahl von Steuermodulen 7-9 umfasst, welche unten detailliert erläutert werden, ist über ein Paar von Luftleitungen 10, 11 mit dem Probenraum 4 verbunden und bildet zusammen mit dem Probenraum 4 und den Luftleitungen 10, 11 ein Inkubationssystem. Jedes Steuermodul 7-9 des Steuersystems 6 steuert einen Parameter der Probenumgebung im Probenraum 4. Mögliche Probenumgebungsparameter beinhalten beispielsweise einen Sauerstoffgehalt, einen Kohlenstoffdioxidgehalt, eine Luftfeuchtigkeit und eine Lufttemperatur der Luft in dem Probenraum 4, oder eine Temperatur eines Probentischs oder einer Probenhalterung, eines Objektivheizelements oder von Probenkammern. Die Probenumgebungsparameter, welche sich auf die die Probe umgebende Atmosphäre beziehen, werden durch das Steuersystem 6 dadurch gesteuert, dass Luft von dem Steuersystem 6 über die Luftleitung 10 in den Probenraum 4 geführt wird und dort die Probe umspült. Gleichzeitig wird von dem Steuersystem 6 Luft aus dem Probenraum 4 über die Luftleitung 11 angesaugt und neu aufbereitet. Wie in Fig. 1 angedeutet, wird die Luft zwischen dem Steuermodul 9 und dem Steuermodul 8 sowie zwischen dem Steuermodul 8 und dem Steuermodul 7 jeweils über entsprechende Luftleitungsverbindungsstücke weitergeleitet. Dabei wird in jedem der Steuermodule 7-9 jeweils ein Parameter der in den Probenraum 4 zu leitenden Luft eingestellt, um gewünschte, definierte Bedingungen in den Probenraum 4 zu realisieren. Bevorzugt sind die Steuermodule dabei derart in der Stromrichtung der in dem Probenraum 4 strömenden Luft angeordnet, dass eine von einem der Steuermodule eingestellte Größe von den nachfolgenden Steuermodulen nicht oder kaum beeinflusst wird. So kann beispielsweise das Steuermodul 9 ein Steuermodul zur Steuerung des Kohlenstoffdioxidgehalts sein, das Steuermodul 8 kann ein Steuermodul zur Steuerung des Sauerstoffgehalts sein und das Steuermodul 7 kann ein Steuermodul zur Steuerung der Lufttemperatur sein. Jede Steuergröße wird in dem Steuersystem 6 von nur einem Steuermodul 7-9 eingestellt, d. h. die Steuergrößen der Steuermodule 7-9 sind voneinander paarweise verschieden und es gibt keine Redundanz

Sowohl die ansteuerbare Komponente 5 des Mikroskopsystems 2 als auch die Steuermodule 7-9 des Steuersystems 6 werden von einem elektronischen Rechnersystem 12, beispielsweise in der Form eines herkömmlichen Computers oder einer separaten elektronischen Bedieneinheit, angesteuert. Zu diesem Zweck sind die ansteuerbare Komponente 5 des Mikroskopsystems 2, das Steuersystem 6 und der Computer 12 mit einem gemeinsamen Bussystem 13 verbunden, wodurch es möglich wird, dass die Kommunikation zwischen den verschiedenen beteiligten Komponenten über ein einheitliches Bussystem und ein einheitliches Busprotokoll abgewickelt wird. Das Busprotokoll kann jedes geeignete Busprotokoll sein, beispielsweise ein CAN-Protokoll, ein RS232-Protokoll oder ein USB-Protokoll. Sowohl das Mikroskopsystem 2 als auch das Steuersystem 6 weisen entsprechende Schnittstellen auf. Wie bereits oben erwähnt, bezeichnet der Begriff des "einheitlichen Busprotokolls" dabei ein Busprotokoll, unter welchem die Steuermodule auf der Anwendungsschicht einheitlich angesteuert werden.

Wie in Fig. 1 schematisch dargestellt ist, sind Abschnitte 13a-13c des Busses 13 als integrierte Bestandteile der Steuermodule 7-9 ausgebildet, d. h. die Steuermodule 7-9 sind eingerichtet, um jeweils ein an einer Schnittstelle empfangenes Signal über eine weitere Schnittstelle an ein anderes der Steuermodule wieder auszugeben. So kann insbesondere eine serielle, aber auch eine parallele Busarchitektur ausgebildet werden. Wie nachfolgend näher erläutert werden wird, sind die Steuermodule 7-9 derart ausgestaltet, dass die dafür notwendige elektrische Kopplung zwischen den Schnittstellen verschiedener Steuermodule automatisch hergestellt wird, wenn die Steuermodule 7-9 übereinander gestapelt werden, wie in Fig. 1 gezeigt. Ähnlich werden auch die Luftverbindungen zwischen den Steuermodulen automatisch hergestellt, wenn diese aufeinander gestapelt werden.

Unter Bezugnahme auf Fig. 2 wird als nächstes ein Steuermodul nach einem Ausführungsbeispiel der Erfindung näher erläutert. Das Steuermodul 20, welches in Fig. 2 nur schematisch dargestellt ist, kann beispielsweise als Steuermodul 7 oder 8 des Steuersystems 6 von Fig. 1 verwendet werden.

Das Steuermodul 20 umfasst ein Gehäuse 21, in welchem eine Lufteintrittsöffnung 22 an einer unteren Seitenfläche und eine Luftaustrittsöffnung 23 an einer oberen Seitenfläche ausgebildet ist. Die Lufteintrittsöffnung 22 und die Luftaustrittsöffnung 23 dient zum Empfangen bzw. zum Abgeben der Luft, welche in den Probenraum des Mikroskopsystems 4 zu leiten ist. Die Lufteintrittsöffnung 22 und die Luftaustrittsöffnung 23 sind mit einer Durchführung in dem Steuermodul 20 verbunden, so dass die Luft von der Lufteintrittsöffnung 22 zu der Luftaustrittsöffnung 23 durch das Steuermodul geführt wird. An der Durchführung für die Luft ist eine Einrichtung 24 zum Beeinflussen eines Parameters der Luft vorgesehen. Die Ausgestaltung und Funktionsweise der Einrichtung 24 hängt von der von dem Steuermodul 20 zu beeinflussenden Größe ab oder kann beispielsweise ein Heizelement oder mehrere Heizelemente umfassen, falls das Steuermodul der Steuerung der Lufttemperatur dient, oder kann ein Ventil umfassen, falls das Steuermodul der Steuerung des Sauerstoffgehalts oder des Kohlenstoffdioxidgehalts der Luft dient. Im letzteren Fall sind typischerweise extern von dem Steuermodul 20 vorgesehene Behälter für das entsprechende Gas, Stickstoff zur Verdrängung von Sauerstoff oder Kohlenstoffdioxid, vorgesehen, von welchen Stickstoff bzw. Kohlenstoffdioxid in den durch das Steuermodul 20 strömenden Luftstrom eingespeist werden kann. Die Einrichtung 24 ist mit einer Steuermodulelektronik 25 gekoppelt, welche wiederum mit einem Steuermodulspeicher 26 verbunden ist. In dem Speicher 26 wird ein Sollwert für den von dem Steuermodul 20 zu steuernden Probenumgebungsparameter abgelegt, welcher von der Steuermodulelektronik 25 ausgelesen wird, die wiederum die Einrichtung 24 in Abhängigkeit von dem Sollwert ansteuert. Der Sollwert wird in Form eines entsprechenden Steuerbefehls über den Bus 13 an das Steuermodul 20 übermittelt. Die Steuermodulelektronik 25 ist mit der Schnittstelle 27, welche mit dem Bus 13 zu koppeln ist, verbunden, um den über diese Schnittstelle 27 empfangenen Steuerbefehl auszuwerten. Für eine Busarchitektur, wie sie in Fig. 1 dargestellt ist, umfasst der Steuerbefehl eine Adressinformation, welche das Steuermodul identifiziert, an welches der Steuerbefehl gerichtet ist und welche auf der Basis des Steuerbefehls betätigt werden soll. Die Steuermodulelektronik 25 ist eingerichtet, um die Adressinformation aus dem Steuerbefehl auszulesen und so zu ermitteln, ob der Steuerbefehl für das Steuermodul 20 bestimmt ist. Nur in diesem Fall wird der Steuerbefehl weiterverarbeitet, der mit dem Steuerbefehl übertragene Sollwert für den Probenumgebungsparameter ermittelt und in dem Steuermodulspeicher 26 abgelegt.

Wie bereits unter Bezugnahme auf Fig. 1 oben erwähnt, wird der Bus 13 durch das Steuermodul 20 geschleift. Zu diesem Zweck umfasst das Steuermodul 20 eine weitere Schnittstelleneinheit 28, welche mit der Schnittstelleneinheit 27 gekoppelt ist und über welche ein über die Schnittstelleneinheit 27 empfangenes Signal, an das nächste Steuermodul weitergeleitet wird.

Das Steuermodul 20 weist einen weiteren Anschluss 29 auf, welcher mit der Steuermodulelektronik 25 gekoppelt ist und dazu dient, ein Signal von einem in dem Probenraum 4 des Mikroskopsystems 2 vorgesehenen Sensor zu empfangen. Dieses Signal, welches beispielsweise ein einfaches Spannungssignal sein kann, entspricht dem Ist-Wert des von dem Steuermodul 20 zu steuernden Probenumgebungsparameters. Dieser Ist-Wert wird ebenfalls in dem Steuermodulspeicher 26 gespeichert. Auf eine entsprechende, an das Steuermodul 20 adressierte Anfrage hin, welche in Form eines Befehls über die Schnittstelle 27 empfangen wird, liest die Steuermodulelektronik 25 den Ist-Wert aus dem Steuermodulspeicher 26 aus und übermittelt diesen über die Schnittstelle 27 und das Bussystem 13 zu dem Computer 12. Auf diese Weise wird es möglich, die Ist-Werte in dem Probenraum automatisch durch den Computer 12 zu protokollieren. Der Sensoranschluss 29 muss jedoch nicht notwendig in dem Steuermodul 20 vorgesehen sein. Insbesondere ist es möglich, Sensoren in dem Probenraum 4 auch auf andere Weise, beispielsweise über eine Schnittstelle des Mikroskopsystems, mit dem Computer 12 zu verbinden. Wie unten weiter ausgeführt werden wird, können Sensoren auch in den Steuermodulen integriert sein.

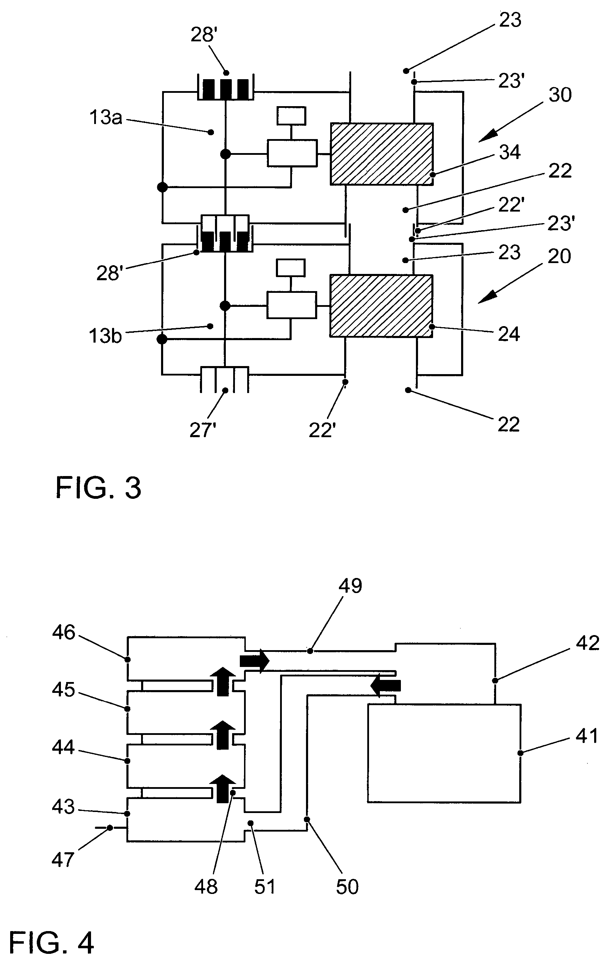

Unter Bezugnahme auf Fig. 3 wird als nächstes die Kombination verschiedener Steuermodule 20, 30 zu einem Steuersystem erläutert. Der Aufbau des Steuermoduls 30 ist im Wesentlichen identisch zum Aufbau des unter Bezugnahme auf Fig. 2 erläuterten Steuermoduls 20, weist jedoch eine andere Einrichtung 34 auf, mit welcher die durch das Steuermodul 30 strömende Luft beeinflusst wird, da das Steuermodul 30 einen anderen Probenumgebungsparameter als das Steuermodul 20 steuert.

Um mehrere Steuermodule 20, 30 zu einem Steuersystem zu kombinieren, müssen elektrische Verwindungen zwischen der Schnittstelleneinheit bzw. der weiteren Schnittstelleneinheit der Steuermodule 20, 30 und der Lufteintritts- bzw. Luftaustrittsöffnung dieser Steuermodule 20, 30 hergestellt werden. Während derartige Verbindungen auch durch geeignete Kabel bzw. Luftleitungen verwirklicht werden können, ist das in Fig. 2 gezeigte Steuermodul derart ausgestaltet, dass die entsprechenden Verbindungen automatisch hergestellt werden, wenn die Steuermodule 20, 30 aufeinander gestapelt werden, wie nachfolgend erläutert wird. Zur besseren Veranschaulichung sind die Schnittstelleneinheiten 27' bzw. die weiteren Schnittstelleneinheiten 28' der Steuermodule 20, 30 in Fig. 3 nicht nur schematisch, sondern als Steckverbindungen dargestellt. Die Schnittstelleneinheit 27' und die weitere Schnittstelleneinheit 28' jedes der Steuermodule 20, 30 sind dabei als komplementäre Stecker ausgestaltet, so dass die weitere Schnittstelleneinheit 28' eines der Steuermodule direkt mit der Schnittstelleneinheit 27' eines anderen Steuermoduls koppelbar ist. So kann beispielsweise die Schnittstelleneinheit 27' als männlicher RS232-Stecker und die Schnittstelleneinheit 28' als weiblicher RS232-Stecker ausgestaltet sein. Ähnlich weisen auch die Lufteintrittsöffnung 22 und die Luftaustrittsöffnung 23 jedes Steuermoduls 20, 30 eine komplementäre Ausgestaltung auf. In Fig. 3 sind die von dem jeweiligen Gehäuse des Steuermoduls 20, 30 hervorragenden Verbindungsabschnitte 22' bzw. 23' der Lufteintrittsöffnung 22 bzw. der Luftaustrittsöffnung 23 derart ausgestaltet, dass der Verbindungsabschnitt 22' der Lufteintrittsöffnung 22 mit einem Verbindungsabschnitt 23' der Luftaustrittsöffnung 23 eines Steuermoduls mit gleicher Ausgestaltung der Lufteintrittsöffnung und Luftaustrittsöffnung verbindbar ist. Bei dem in Fig. 3 dargestellten Beispiel kann der Verbindungsabschnitt 23' der Luftaustrittsöffnung 23 des Steuermoduls 20 dichtend in den Verbindungsabschnitt 22' der Lufteintrittsöffnung 22 des Steuermoduls 30 eingeführt werden. Durch diese Konstruktion der Steuermodule 20, 30 wird automatisch eine Luftverbindung zwischen den Luftdurchführungen der Steuermodule und eine elektrische Verbindung zwischen den in den Steuermodulen verlaufenden Abschnitten des Busses 13 hergestellt. Die Positionierung der Steuermodule 20, 30 relativ zueinander kann dabei durch (nicht gezeigte) Führungseinrichtungen, wie beispielsweise Stifte oder Ausnehmungen in den oberen bzw. unteren Seitenflächen der Steuermodule 20, 30 unterstützt werden.

Auch bei einem Steuersystem, welches eine Mehrzahl von Steuermodulen umfasst, muss nicht jedes Steuermodul die oben beschriebene Ausgestaltung aufweisen. Insbesondere bei einer Stapelung von Steuermodulen übereinander ist es wünschenswert, dass die Lufteintrittsöffnung 22 und die Schnittstelle 27 des untersten Steuermoduls des Steuersystems nicht an der unteren Seitenfläche, sondern an einer leichter zugänglichen Seitenfläche vorgesehen ist. Wie in Fig. 1 schematisch dargestellt ist, kann dies beispielsweise dadurch realisiert werden, dass die Lufteintrittsöffnung 22 und die Schnittstelleneinheit 27 an einer seitlichen Seitenfläche des Gehäuses des Steuermoduls vorgesehen sind.

Während bei dem Ausführungsbeispiel von Fig. 1-3 die Steuermodule so ausgestaltet sind, dass sie stapelbar sind, wobei durch die Stapelung automatisch die entsprechenden elektrischen Verbindungen und Luftverbindungen hergestellt werden, können die Steuermodule auch so ausgestaltet sein, dass die Lufteintrittsöffnung 22 und die Schnittstelleneinheit 27 an einer seitlichen Seitenfläche, beispielsweise der linken Seitenfläche des Gehäuses vorgesehen sind, und die Luftaustrittsöffnung 23 und die weitere Schnittstelleneinheit 28 an der anderen seitlichen Seitenfläche, beispielsweise der rechten Seitenfläche, vorgesehen sind. In diesem Fall werden die entsprechenden elektrischen und Luftverbindungen automatisch hergestellt, wenn die Steuermodule seitlich aneinander gereiht werden.

Wenngleich in Fig. 2 und 3 nicht gezeigt, versteht es sich, dass das Steuermodul 20 weitere Komponenten, wie beispielsweise einen internen Sensor zum Ermitteln eines oder mehrerer Parameter der Luft umfassen kann, welcher mit der Steuermodulelektronik 25 gekoppelt ist, wobei die Betätigung der Einrichtung 24 in Abhängigkeit von einem von dem internen Sensor ermittelten Wert erfolgt. So kann der Sensor beispielsweise die Temperatur der bei der Lufteintrittsöffnung 22 einströmenden Luft ermitteln, und eine Heizleistung der Einrichtung 24 kann in Abhängigkeit von dieser Eingangstemperatur eingestellt werden, um eine gewünscht Ausgangstemperatur für die Luft zu erzielen.

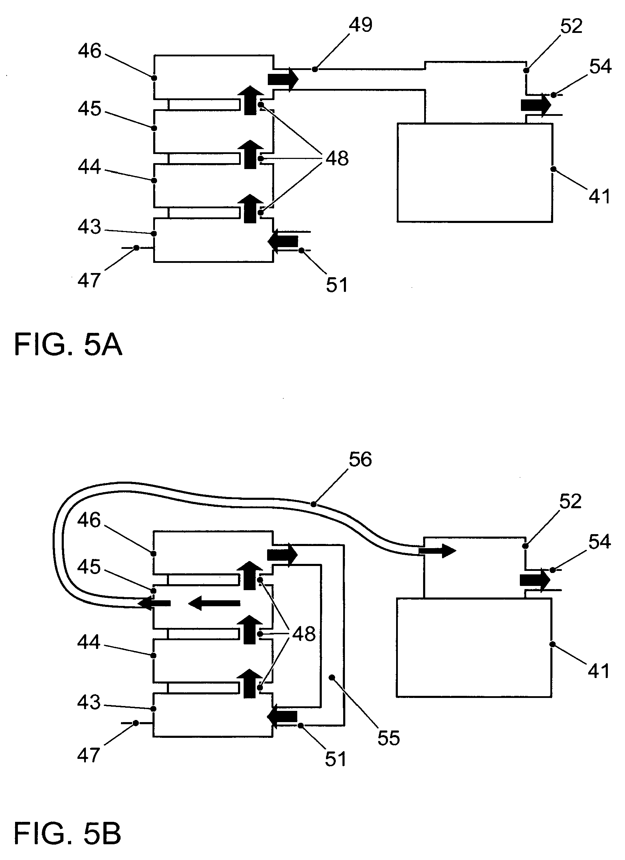

Unter Bezugnahme auf Fig. 4 und Fig. 5A und 5B werden als nächstes verschiedene Weisen der Luftführung zwischen den Steuermodulen des Steuersystems und dem Probenraum des Mikroskopsystems beschrieben. Identische oder ähnliche Elemente sind in Fig. 4, 5A und 5B mit denselben Bezugszeichen versehen. Schematisch dargestellt ist ein Mikroskopsystem 41 mit einem Probenraum 42 sowie ein Steuersystem mit einer Mehrzahl von Steuermodulen 43-46. Die Steuermodule werden, wie bereits oben beschrieben, über einen Bus 47 von einem Computer oder einer Bedieneinheit angesteuert. Luft wird zwischen den Steuermodulen 43-46 über nur schematisch angedeutete Luftverbindungsabschnitte 48 geführt, wobei die Luftströmungsrichtung schematisch mit Pfeilen angedeutet ist. Bei dem in Fig. 4 dargestellten Ausführungsbeispiel, bei welchem die Strömung der Luft im Wesentlichen identisch zu dem Ausführungsbeispiel von Fig. 1 ist, wird die in die Probenumgebung zu leitende Luft von dem Steuermodul 46 über eine Luftverbindung 49 in den Probenraum 42 geleitet. Gleichzeitig wird Luft aus dem Probenraum 42 über eine Luftleitung 50 in das Steuermodul 43 angesaugt, welches eine Ansaugöffnung 51 für die Luft aus dem Probenraum 42 aufweist. Die angesaugte Luft durchläuft dann die Luftdurchführungen in den Steuermodulen 43-46, wo die verschiedenen Parameter der Luft, wie beispielsweise ihre Temperatur, ihre Luftfeuchtigkeit, ihr Sauerstoffgehalt oder ihr Kohlenstoffdioxidgehalt, gemäß der entsprechenden Funktion der Steuermodule beeinflusst wird. Die Luft wird anschließend über die Luftleitung 49 wieder dem Probenraum 42 zugeführt. Fig. 4 ist somit ein Beispiel für eine zirkulierende Luftströmung.

Im Gegensatz dazu ist bei dem Ausführungsbeispiel von Fig. 5A die Ansaugöffnung 51 des Steuermoduls 43 nicht über eine Luftleitung mit dem Probenraum verbunden. Vielmehr saugt das Steuermodul 43 an der Ansaugöffnung 51 Frischluft an, welche anschließend durch die Steuermodule 43-46 durchgeführt wird, wobei wiederum jeweils die Parameter der Luft entsprechend den Steuerfunktionen der einzelnen Steuermodule beeinflusst oder gesteuert werden. Nach dem Durchlaufen aller Steuermodule wird die Luft von dem Steuermodul 46 über die Luftleitung 49 zu einem Probenraum 52 geführt. Der Probenraum 52 weist bei dem in Fig. 5A gezeigten Ausführungsbeispiel keine Öffnung auf, durch welche die Luft von dem Probenraum 52 wieder den Steuermodulen zugeführt würde. Vielmehr umfasst der Probenraum 52 eine Auslassöffnung 54, durch welche Luft aus dem Probenraum 52 in die Umgebung ausgeblasen wird. Wenngleich die Austrittsöffnung 54 in Fig. 5A als Öffnung in der Wand des Probenraums 52 dargestellt ist, kann sie auch anderweitig ausgestaltet sein, beispielsweise indem ein den Probenraum 52 nach oben abschließender Deckel nur lose auf den Seitenwänden des Probenraums aufliegt, so dass bei einem Überdruck in dem Probenraum 52 der Deckel minimal angehoben wird und Luft somit passiv entweichen kann.

Fig. 5B zeigt ein weiteres Ausführungsbeispiel, welches eine Abwandlung des in Fig. 5A gezeigten Ausführungsbeispiels ist und bei welchem ein Luftstrom zirkulierend durch alle Steuermodule 43-46 geführt wird. Zu diesem Zweck ist die Ausströmöffnung des Steuermoduls 46 mit der Ansaugöffnung 51 des Steuermoduls 43 über eine Luftleitung 55 verbunden. Ein kleinerer Teilluftstrom, welcher schematisch mit kleineren Pfeilen dargestellt ist, wird in dem Steuermodul 45 von dem zirkulierenden Luftstrom abgezweigt und über die Luftleitung 56 zu dem Probenraum 52 geführt. Frischluft oder Gase kann bzw. können über (nicht dargestellte) Ansaugöffnungen in den Steuermodulen angesaugt werden, um die Gesamtmenge der durch die Steuermodule zirkulierenden Luft näherungsweise konstant zu halten.

Es sollte beachtet werden, dass, während bei dem in Fig. 1, 4, 5A und 5B gezeigten Ausführungsbeispiel die in den Probenraum zu leitende Luft durch alle Steuermodule geführt wird, die Luft bei anderen Ausführungsbeispielen auch nur durch einige oder nur eines der Steuermodule des Steuersystems geführt werden kann. So kann beispielsweise eines der Steuermodule eingerichtet sein, um eine Probenhaltertemperatur in dem Probenraum zu steuern. Hierfür ist es nicht nötig, die in den Probenraum zu leitende Luft durch dieses Steuermodul strömen zu lassen.

Wie oben bereits erläutert wurde, ist das Steuersystem - und insbesondere auch jedes einzelne Steuermodul - der vorliegenden Erfindung eingerichtet, um zusammen mit der ansteuerbaren Komponente des Mikroskopsystems über ein einheitliches Bussystem angesteuert zu werden. Die Ansteuerung der verschiedenen Komponenten, insbesondere der ansteuerbaren Komponente 5 des Mikroskopsystems 2 sowie der Steuermodule 7-9 des Steuersystems 6 erfolgt dabei durch den Computer 12, welcher programmiertechnisch eingerichtet ist, um diese Komponenten automatisch anzusteuern. Eine von dem Computer abzuarbeitende Folge von Anweisungen, welche in Form eines Computerprogrammprodukts auf einem Speichermedium gespeichert sind, bietet dabei bevorzugt eine einheitliche Bedienoberfläche, welche sowohl die Ansteuerung des Steuersystems und der ansteuerbaren Komponente des Mikroskopsystems, als auch eine Dokumentierung verschiedener Experimentparameter und die Steuerung einer Bildaufnahme durch das Mikroskopsystem ermöglicht. Dadurch, dass sowohl die verschiedenen Steuermodule des Steuersystems zur Beeinflussung von Probenumgebungsparametern als auch eine oder möglicherweise sogar mehrere ansteuerbare Komponenten eines Mikroskopsystems von dem Computer 12 unter einer einheitlichen Bedienoberfläche gesteuert werden, wird es möglich, komplexe Abläufe während des Verlaufs eines Experiments optimal aufeinander abzustimmen.

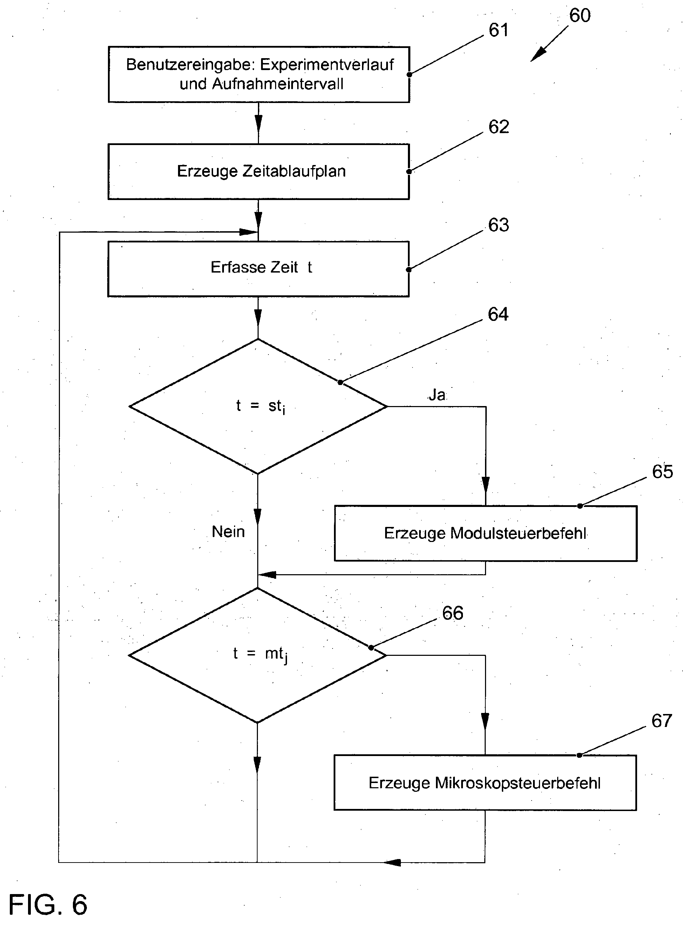

Unter Bezugnahme auf Fig. 6 wird als nächstes ein Verfahren 60 nach einem Ausführungsbeispiel der Erfindung beschrieben, welches von dem Computer 12 ausgeführt wird, um das Steuersystem, welches die Probenumgebungsparameter beeinflusst, und eine ansteuerbare Komponente des Mikroskopsystems zu steuern. Bei dem dargestellten beispielhaften Verfahren ist die ansteuerbare Komponente des Mikroskopsystems eine Aufnahmeeinrichtung, wie beispielsweise eine Kamera. Zunächst wird bei dem Schritt 61 von einem Benutzer in den Computer 12 eingegeben, in welchen zeitlichen Aufnahmeintervallen die Kamera Aufnahmen von dem Probenmaterial in dem Probenraum zu machen hat. Weiterhin definiert der Benutzer einen Experimentverlauf, d. h. beispielsweise einen festen Satz von Probenumgebungsparametern oder typischerweise die zeitliche Änderung verschiedener Probenumgebungsparameter während des Experiments. Dabei kann der Experimentverlauf auf jede geeignete, für den Benutzer zweckdienliche und bequeme Weise eingegeben werden, beispielsweise indem der Benutzer spezifiziert, dass ein bestimmter Probenumgebungsparameter in einem vorgegebenen Zeitintervall von einem ersten Wert auf einen zweiten Wert linear ansteigen soll, oder dass der Probenumgebungsparameter zu bestimmten Zeitpunkten sprunghaft einen neuen Wert annehmen soll. Basierend auf dem vom Benutzer eingegebenen Experimentverlauf und dem Aufnahmeintervall erzeugt der Computer bei Schritt 62 einen Zeitablaufplan, welcher die Zeitpunke stᵢ enthält, zu welchen ein Steuerbefehl für eines der Steuermodule zu erzeugen ist, um eine Änderung des entsprechenden Probenumgebungsparameters hervorzurufen, sowie die Zeitpunkte mtⱼ, zu welchen die Kamera des Mikroskopsystems angesteuert werden muss, um ein Bild aufzunehmen. Die nachfolgenden Schritte 63-67 werden wiederholt, bis das Experiment durch eine erneute Benutzereingabe abgebrochen wird oder eine vorgegebene maximale Experimentzeit erreicht ist. Zunächst wird bei Schritt 63 eine Zeit t seit Beginn des Experiments erfasst, beispielsweise basierend auf der Systemzeit des Computers 12. Anschließend wird bei Schritt 64 ermittelt, ob die aktuelle Zeit t gleich einem der vorher ermittelten Zeitpunkte stᵢ ist, bei welchen eines der Steuermodule anzusteuern ist. Falls dies der Fall ist, wird bei Schritt 65 ein entsprechender Modülsteuerbefehl erzeugt und an den Bus 13 ausgegeben. Wie bereits früher erläutert wurde, enthält der Modulsteuerbefehl insbesondere eine Adressinformation zur Identifikation des Steuermoduls, welches mit dem Befehl angesteuert wird. Nachfolgend wird bei Schritt 66 ermittelt, ob die aktuelle Zeit t gleich einem der Zeitpunkte mtⱼ ist, bei welchen die ansteuerbare Komponente - d. h. in diesem Fall die Kamera - des Mikroskopsystems angesteuert werden muss. Falls dies der Fall ist, wird als nächstes bei Schritt 67 ein Mikroskopsteuerbefehl erzeugt. Wie ebenfalls bereits oben erörtert, enthält auch der Mikroskopsteuerbefehl eine Adressinformation, aufgrund derer die ansteuerbare Komponente des Mikroskopsystems identifiziert wird. Anschließend werden die Schritte 63-67 wiederholt.

Es ist ersichtlich, dass das beispielhafte Verfahren 60 von Fig. 6 nur grundlegende Ansteuerfunktionen für das Steuersystem zur Beeinflussung von Probenumgebungsparametern und der ansteuerbaren Komponente des Mikroskopsystems umfasst. Weitere Funktionen können jedoch leicht in das Verfahren integriert werden. Derartige Funktionen können beispielsweise eine automatische Speicherung von aufgenommenen Bildern, möglicherweise ergänzt um die gleichzeitige Speicherung zusätzlicher Informationen, wie der aktuellen Zeit zum Zeitpunkt der Aufnahme oder aktueller Probenumgebungsparameter, oder die Protokollierung und/oder Auswertung von Probenumgebungsparameterwerten umfassen.

Während bei den vorhergehend detailliert erörterten Ausführungsbeispielen das Mikroskopsystem jeweils nur eine ansteuerbare Komponente aufweist, ist ersichtlich, dass auch eine Mehrzahl von ansteuerbaren Komponenten des Mikroskopsystems zusammen mit dem Steuersystem über ein einheitliches Bussystem angesteuert werden kann. Ähnlich muss das Steuersystem nicht, wie in den vorhergehenden Ausführungsbeispielen diskutiert, eine Mehrzahl von Steuermodulen umfassen, sondern kann auch aus einem einzigen Steuermodul bestehen. In diesem Fall kann auch das einzelne Steuermodul und die ansteuerbare Komponente des Mikroskopsystems mit dem unter Bezugnahme auf Fig. 6 beschriebenen Verfahren angesteuert werden.

Während die vorliegende Erfindung oben unter Bezugnahme auf eine Mikroskopanordnung erläutert wurde, können die Steuermodule und das Steuersystem zur Beeinflussung von Probenumgebungsparametern nicht nur bei Mikroskopanordnungen, sondern allgemein bei jedem Inkubationssystem Verwendung finden.

Zusammenfassend werden nach der vorliegenden Erfindung ein Steuermodul zur Beeinflussung eines Probenumgebungsparameters eines Inkubationssystems, ein Steuersystem zur Beeinflussung einer Mehrzahl von Probenumgebungsparametern, ein Verfahren zur Steuerung einer Mikroskopanordnung mit einem Steuersystem sowie ein entsprechendes Computerprogrammprodukt zur Verfügung gestellt, welche eine vereinfachte Datenkommunikation zwischen den verschiedenen beteiligten Komponenten unter Verwendung eines einheitlichen Bussystems ermöglichen und somit eine benutzerfreundliche, einheitliche Steuerung der verschiedenen Komponenten unter einer Bedienoberfläche durch ein Rechnersystem bereitstellen.

## Patentansprüche

1. Steuermodul zur Beeinflussung eines Probenumgebungsparameters eines Inkubationssystems, umfassend
eine Schnittstelleneinheit (27; 27'), welche mit einem Bus zu koppeln ist, zum Empfangen eines Steuerbefehls,
eine Steuereinrichtung (24-26; 34), welche mit der Schnittstelleneinheit (27; 27') gekoppelt und eingerichtet ist, um in Abhängigkeit von dem Steuerbefehl den Probenumgebungsparameter zu beeinflussen, und
eine weitere Schnittstelleneinheit (28; 28'), welche mit der Schnittstelleneinheit (27; 27') gekoppelt ist, zum Wiederausgeben des empfangenen Steuerbefehls,
wobei das Steuermodul (7-9; 20, 30) eine Luftaustrittsöffnung (23) zum Abgeben von in eine Probenumgebung zu leitender Luft umfasst und eingerichtet ist, um den Probenumgebungsparameter durch Beeinflussung der in die Probenumgebung zu leitenden Luft zu beeinflussen, und
wobei das Steuermodul (7-9; 20, 30) eine Lufteintrittsöffnung (22) zum Empfangen der in die Probenumgebung zu leitenden Luft und eine Durchführung für die Luft von der Lufteintrittsöffnung (22) zu der Luftaustrittsöffnung (23) umfasst.

2. Steuermodul nach Anspruch 1,
**dadurch gekennzeichnet,**
**dass** die Steuereinrichtung (24-26; 34) eingerichtet ist, um den Steuerbefehl auszuwerten und um so zu ermitteln, ob der Steuerbefehl an das Steuermodul (7-9; 20, 30) adressiert ist.

3. Steuermodul nach Anspruch 1 oder 2,
**dadurch gekennzeichnet,**
**dass** die Steuereinrichtung (24-26) eingerichtet ist, um den Steuerbefehl auszuwerten, um einen Sollwert für den Probenumgebungsparameter zu ermitteln, und Speichermittel (26) zum Speichern des Sollwerts umfasst.

4. Steuermodul nach Anspruch 3,
**dadurch gekennzeichnet,**
**dass** das Steuermodul (20) einen Sensoranschluss (29) zum Empfangen eines Ist-Werts des Probenumgebungsparameters von einem Sensor umfasst, wobei die Steuereinrichtung (24-26) eingerichtet ist, um den Ist-Wert in den Speichermitteln (26) zu speichern.

5. Steuermodul nach Anspruch 4,
**dadurch gekennzeichnet,**
**dass** die Steuereinrichtung (24-26) eingerichtet ist, um den Ist-Wert über die Schnittstelleneinheit (27; 27') auszugeben.

6. Steuermodul nach einem der vorhergehenden Ansprüche,
**dadurch gekennzeichnet,**
**dass** das Steuermodul (8, 9; 20, 30) ein Gehäuse (21) umfasst, und
**dass** die Lufteintrittsöffnung (22) und die Luftaustrittsöffnung (23) an entgegengesetzten Seiten des Gehäuses (21) ausgebildet sind.

7. Steuermodul nach Anspruch 6,
**dadurch gekennzeichnet,**
**dass** die Lufteintrittsöffnung (22) und die Luftaustrittsöffnung (23) jeweils einen Verbindungsabschnitt (22', 23') umfassen, welche komplementär ausgestaltet sind, so dass der Verbindungsabschnitt (22') der Lufteintrittsöffnung (22) mit dem Verbindungsabschnitt (23') der Luftaustrittsöffnung (23) eines identischen Steuermoduls (30) koppelbar ist.

8. Steuermodul nach Anspruch 6 oder 7,
**dadurch gekennzeichnet,**
**dass** die Schnittstelleneinheit (27; 27') an einer und die weitere Schnittstelleneinheit (28; 28') an einer anderen der entgegengesetzten Seiten des Gehäuses (21) angeordnet ist, an welchen die Lufteintrittsöffnung (22) bzw. die Luftaustrittsöffnung (23) angeordnet sind.

9. Steuermodul nach einem der vorhergehenden Ansprüche,
**dadurch gekennzeichnet,**
**dass** die Schnittstelleneinheit einen Verbindungsabschnitt (27') umfasst und dass die weitere Schnittstelleneinheit einen weiteren Verbindungsabschnitt (28') umfasst, wobei
der Verbindungsabschnitt (27') und der weitere Verbindungsabschnitt (28') komplementär ausgestaltet sind, so dass der Verbindungsabschnitt (27') der Schnittstelleneinheit mit dem weiteren Verbindungsabschnitt der weiteren Schnittstelleneinheit eines anderen Steuermoduls koppelbar ist, welcher identisch zu dem weiteren Verbindungsabschnitt (28') des Steuermoduls ausgestaltet ist.

10. Steuermodul nach einem der vorhergehenden Ansprüche,
**dadurch gekennzeichnet,**
**dass** der Probenumgebungsparameter ausgewählt ist aus einer Gruppe umfassend eine Probenhaltertemperatur, eine Lufttemperatur, eine Luftfeuchtigkeit, einen Luft-Kohlenstoffdioxidgehalt und einen Luft-Sauerstoffgehalt.

11. Steuersystem zur Beeinflussung einer Mehrzahl von Probenumgebungsparametern eines Inkubationssystems, umfassend
einen Bus (13) zur Übertragung eines Steuerbefehls,
eine Mehrzahl von Steuermodulen (7-9; 20, 30) mit jeweils einer mit dem Bus (13) gekoppelten Schnittstelleneinheit (27; 27') zum Empfangen des Steuerbefehls, wobei jedes Steuermodul (7-9; 20, 30) der Mehrzahl von Steuermodulen eine mit der jeweiligen Schnittstelleneinheit (27; 27') gekoppelte Steuereinrichtung (24-26; 34) umfasst, welche eingerichtet ist, um einen Probenumgebungsparameter der Mehrzahl von Probenumgebungsparametern in Abhängigkeit von dem Steuerbefehl zu beeinflussen, wobei wenigstens eines der Steuermodule (7-9; 20, 30) als Steuermodul nach einem der Ansprüche 1-10 ausgestaltet ist.

12. Steuersystem nach Anspruch 11,
**dadurch gekennzeichnet,**
**dass** die Steuereinrichtung (24-26) jedes Steuermoduls (7-9; 20, 30) der Mehrzahl von Steuermodulen jeweils eingerichtet ist, um den Steuerbefehl auszuwerten und um so zu ermitteln, ob der Steuerbefehl an das zugehörige Steuermodul (7-9; 20, 30) adressiert ist.

13. Steuersystem nach Anspruch 11 oder 12,
**dadurch gekennzeichnet,**
**dass** ein erstes Steuermodul (7-9; 20, 30) der Mehrzahl von Steuermodulen eine weitere Schnittstelleneinheit (28; 28') aufweist, wobei ein Abschnitt (13a, 13b, 13c) des Busses (13) von der Schnittstelleneinheit (27; 27') des ersten Steuermoduls (7-9; 20, 30) durch das erste Steuermodul (7-9; 20, 30) zu der weiteren Schnittstelleneinheit (28; 28') des ersten Steuermoduls (7-9; 20, 30) geführt ist.

14. Steuersystem nach Anspruch 13,
**dadurch gekennzeichnet,**
**dass** die weitere Schnittstelleneinheit (28; 28') des ersten Steuermoduls (7, 8; 20) mit der Schnittstelleneinheit (27; 27') eines zweiten Steuermoduls (8, 9; 30) elektrisch gekoppelt ist.

15. Steuersystem nach Anspruch 14,
**dadurch gekennzeichnet,**
**dass** das erste Steuermodul (7, 8; 20) und das zweite Steuermodul (8, 9; 30) derart ausgestaltet sind, dass die weitere Schnittstelleneinheit (28; 28') des ersten Steuermoduls (7, 8; 20) und die Schnittstelleneinheit (27; 27') des zweiten Steuermoduls (8, 9; 30) elektrisch gekoppelt werden, wenn eine erste Seitenfläche des ersten Steuermoduls (7, 8; 20) in Kontakt mit einer zweiten Seitenfläche des zweiten Steuermoduls (8, 9; 30) gebracht wird.

16. Steuersystem nach Anspruch 14 oder 15,
**dadurch gekennzeichnet,**
**dass** das erste Steuermodul (7, 8; 20) und das zweite Steuermodul (8, 9; 30) jeweils eine Durchgangsöffnung (22, 23) für in eine Probenumgebung zu leitende Luft aufweisen, welche verbunden sind, um einen Austausch der in die Probenumgebung zu leitenden Luft zwischen dem ersten Steuermodul (7, 8; 20) und dem zweiten Steuermodul (8, 9; 30) zu ermöglichen.

17. Steuersystem nach einem der Ansprüche 11-16,
**dadurch gekennzeichnet,**
**dass** Steuergrößen der Mehrzahl von Steuermodulen (7-9; 20, 30) paarweise verschieden sind.

18. Steuersystem nach einem der Ansprüche 11-17,
**dadurch gekennzeichnet,**
**dass** der Bus (13) ein serieller Bus ist.

19. Steuersystem nach einem der Ansprüche 11-18,
**dadurch gekennzeichnet,**
**dass** ein Bus-Protokoll des Busses (13) ausgewählt ist aus einer Gruppe umfassend ein CAN-Protokoll, ein RS232-Protokoll und ein USB-Protokoll.

20. Steuersystem nach einem der Ansprüche 11-19,
**dadurch gekennzeichnet,**
**dass** jedes Steuermodul der Mehrzahl von Steuermodulen (7-9; 20, 30) als Steuermodul nach einem der Ansprüche 1-10 ausgestaltet ist.

21. Mikroskopanordnung, umfassend
ein Mikroskopsystem (2) zur Beobachtung einer Probe in einem Probenraum (4), und ein Steuersystem (6) nach einem der Ansprüche 11-20 zur Beeinflussung einer Mehrzahl von Probenumgebungsparametern in dem Probenraum (4).

22. Mikroskopanordnung nach Anspruch 21,
**dadurch gekennzeichnet,**
**dass** das Mikroskopsystem (2) mindestens eine ansteuerbare Komponente (5) umfasst, welche über eine Schnittstelleneinheit mit dem Bus (13) gekoppelt ist, um einen Steuerbefehl zu empfangen, und welche eingerichtet ist, um basierend auf dem Steuerbefehl betätigt zu werden.

23. Mikroskopanordnung nach Anspruch 22,
**dadurch gekennzeichnet,**
**dass** die ansteuerbare Komponente (5) eingerichtet ist, um zu ermitteln, ob der Steuerbefehl an die ansteuerbare Komponente (3) adressiert ist.

24. Mikroskopanordnung nach einem der Ansprüche 21-23,
**dadurch gekennzeichnet,**
**dass** ein Steuermodul (7; 43) der Mehrzahl von Steuermodulen (7-9; 43-46) eine Ansaugöffnung (51; 53) für Frischluft oder für Luft aus dem Probenraum (4; 42; 52) aufweist.

25. Mikroskopanordnung nach einem der Ansprüche 21-24,
**dadurch gekennzeichnet,**
**dass** ein Steuermodul (9; 46) der Mehrzahl von Steuermodulen (7-9; 43-46) über eine Luftzuführung (49) mit dem Probenraum (4) verbunden ist, um Luft in eine Probenumgebung zu leiten.

26. Mikroskopanordnung nach einem der Ansprüche 21-25,
**dadurch gekennzeichnet,**
**dass** die Mikroskopanordnung ein elektronisches Rechnersystem (12) umfasst, welches mit dem Bus (13) gekoppelt und eingerichtet ist, um den Steuerbefehl über den Bus (13) auszugeben.

27. Verfahren zur Steuerung einer Mikroskopanordnung (1) mit einem Mikroskopsystem (2), welches eine ansteuerbare Komponente (5) aufweist, und mit einem Steuermodul (7-9) zur Beeinflussung eines Probenumgebungsparameters eines Probenraums (4) des Mikroskopsystems (2) mit einem elektronischen Rechnersystem (12), umfassend die Schritte
Erzeugen eines Mikroskopsteuerbefehls zur Ansteuerung der ansteuerbaren Komponente (5), wobei der Mikroskopsteuerbefehl mit einer Adressinformation für die ansteuerbare Komponente (5) versehen wird,
Erzeugen eines Modulsteuerbefehls zur Ansteuerung des Steuermoduls (7-9), wobei der Modulsteuerbefehl mit einer Adressinformation für das Steuermodul (7-9) versehen wird, und
Ausgeben des Mikroskopsteuerbefehls und des Modulsteuerbefehls, um die ansteuerbare Komponente (5) und das Steuermodul (7-9) anzusteuern,
wobei
das Steuermodul (7-9) den Modulsteuerbefehl über eine Schnittstelleneinheit (27; 27') des Steuermoduls (7-9) empfängt,
das Steuermodul (7-9) den empfangenen Modulsteuerbefehl über eine weitere Schnittstelleneinheit (28; 28') wieder ausgibt,
das Steuermodul (7-9) in die Probenumgebung zu leitende Luft durch eine Lufteintrittsöffnung (22) empfängt,
das Steuermodul (7-9) die in die Probenumgebung zu leitende Luft zur Beeinflussung des Probenumgebungsparameters abhängig von dem Modulsteuerbefehl beeinflusst, und
das Steuermodul (7-9) die in die Probenumgebung zu leitende Luft über eine Luftaustrittsöffnung (23) abgibt.

28. Verfahren nach Anspruch 27,
**dadurch gekennzeichnet,**
**dass** der Mikroskopsteuerbefehl und der Modulsteuerbefehl über dieselbe Schnittstelle des elektronischen Rechnersystems (12) ausgegeben werden.

29. Verfahren nach Anspruch 27 oder 28,
**dadurch gekennzeichnet,**
**dass** der Modulsteuerbefehl einen Sollwert für den Probenumgebungsparameter umfasst.

30. Verfahren nach einem der Ansprüche 27-29,
**dadurch gekennzeichnet,**
**dass** das Verfahren die Schritte Auslesen eines Zeitablaufplans und Überwachen einer Ablaufzeit umfasst, wobei der Modulsteuerbefehl in Abhängigkeit von dem Zeitablaufplan und der Ablaufzeit erzeugt wird.

31. Verfahren nach Anspruch 30,
**dadurch gekennzeichnet,**
**dass** der Mikroskopsteuerbefehl in Abhängigkeit von dem Zeitablaufplan und der Ablaufzeit erzeugt wird.

32. Verfahren nach einem der Ansprüche 27-31,
**dadurch gekennzeichnet,**
**dass** das Verfahren den Schritt Empfangen eines Ist-Werts des Probenumgebungsparameters von dem Steuermodul (7-9) umfasst.

33. Verfahren nach Anspruch 32,
**dadurch gekennzeichnet,**
**dass** der Ist-Wert von dem elektronischen Rechnersystem (12) gespeichert wird.

34. Verfahren nach einem der Ansprüche 27-33,
**dadurch gekennzeichnet,**
**dass** das Verfahren den Schritt Empfangen von Bilddaten von dem Mikroskopsystem (2) umfasst.

35. Computerprogrammprodukt, umfassend Anweisungen, welche derart eingerichtet sind, dass bei einer Ausführung der Anweisungen durch ein elektronisches Rechnersystem (12) das elektronische Rechnersystem (12) das Verfahren nach einem der Ansprüche 27-34 ausführt.

36. Computerprogrammprodukt nach Anspruch 35,
**dadurch gekennzeichnet,**
**dass** die Anweisungen derart eingerichtet sind, dass sie es bei der Ausführung durch das elektronische Rechnersystem einem Benutzer ermöglichen, sowohl das Mikroskopsystem (2) mit der ansteuerbaren Komponente (5) als auch das Steuermodul (7-9) zur Beeinflussung eines Probenumgebungsparameters des Probenraums des Mikroskopsystems unter einer einheitlichen Bedienoberfläche anzusteuern.

## Claims

1. A control module for influencing a specimen-environment parameter of an incubation system, comprising
an interface unit (27; 27') to be coupled with a bus to receive a control command,
a control device (24-26; 34) coupled with the interface unit (27; 27') and configured to influence the specimen-environment parameter based on the control command, and
a further interface unit (28; 28') coupled with the interface unit (27; 27') to output the received control command again,
wherein the control module (7-9; 20, 30) comprises an air outlet (23) to emit air to be conducted into a specimen environment and is configured to influence the specimen-environment parameter by influencing the air to be conducted into the specimen environment, and
wherein the control module (7-9; 20, 30) comprises an air inlet (22) to receive the air to be conducted into the specimen environment and a conduit for the air from the air inlet (22) to the air outlet (23).

2. The control module according to claim 1,
**characterized in that**
the control device (24-26; 34) is configured to evaluate the control command and to thus ascertain whether the control command is addressed to the control module (7-9; 20, 30).

3. The control module according to claim 1 or 2,
**characterized in that**
the control device (24-26) is configured to evaluate the control command to ascertain a target value for the specimen-environment parameter and comprises a memory (26) to store the target value.

4. The control module according to claim 3,
**characterized in that**
the control module (20) comprises a sensor port (29) to receive an actual value of the specimen-environment parameter from a sensor, the control device (24-26) being configured to store the actual value in the memory (26).

5. The control module according to claim 4,
**characterized in that**
the control device (24-26) is configured to output the actual value via the interface unit (27; 27').

6. The control module according to any one of the preceding claims,
**characterized in that**
the control module (8, 9; 20, 30) comprises a housing (21), and
the air inlet (22) and the air outlet (23) are formed on opposite sides of the housing (21).

7. The control module according to claim 6,
**characterized in that**
the air inlet (22) and the air outlet (23) each comprise a connecting portion (22', 23') formed in a complementary manner, so that the connecting portion (22') of the air inlet (22) is configured to be coupled with the connecting portion (23') of the air outlet (23) of an identical control module (30).

8. The control module according to claim 6 or 7,
**characterized in that**
the interface unit (27; 27') is arranged on one side and the further interface unit (28; 28') is arranged on another side of the opposite sides of the housing (21), on which sides the air inlet (22) and the air outlet (23) are respectively arranged.

9. The control module according to any one of the preceding claims,
**characterized in that**
the interface unit comprises a connecting portion (27') and the further interface unit comprises a further connecting portion (28'), the connecting portion (27') and the further connecting portion (28') being formed in a complementary manner so that the connecting portion (27') of the interface unit is configured to be coupled with the further connecting portion (28') of the further interface unit of another control module that has a configuration identical to the further connecting portion (28') of the control module.

10. The control module according to any one of the preceding claims,
**characterized in that**
the specimen-environment parameter is selected from a group comprising a specimen-holder temperature, an air temperature, an air humidity, an air carbon-dioxide content and an air oxygen content.

11. A control system for influencing a plurality of specimen-environment parameters of an incubation system, comprising
a bus (13) to transmit a control command,
a plurality of control modules (7-9; 20, 30) having respectively an interface unit (27; 27') coupled with the bus to receive the control command, each control module (7-9; 20, 30) of the plurality of control modules (7-9; 20, 30) comprising a control device (24-26; 34) coupled with the respective interface unit (27; 27'), which control device is configured to influence a specimen-environment parameter of the plurality of specimen-environment parameters based on the control command, wherein at least one of the control modules (7-9; 20, 30) is configured as a control module according to any one of claims 1 to 10.

12. The control system according to claim 11,
**characterized in that**
the control device (24-26) of each control module (7-9; 20, 30) of the plurality of control modules is respectively configured to evaluate the control command and to thus ascertain whether the control command is addressed to the respective control module (7-9; 20, 30).

13. The control system according to 11 or claim 12,
**characterized in that**
a first control module (7-9; 20, 30) of the plurality of control modules (7-9; 20, 30) has a further interface unit (28; 28'), a portion (13a, 13b, 13c) of the bus (13) being guided from the interface unit (27; 27') of the first control module (7-9; 20, 30) through the first control module (7-9; 20, 30) to the further interface unit (28; 28') of the first control module (7-9; 20, 30).

14. The control system according to claim 13,
**characterized in that**
the further interface unit (28; 28') of the first control module (7, 8; 20) is electrically coupled with the interface unit (27; 27') of a second control module (8, 9; 30).

15. The control system according to claim 14,
**characterized in that**
the first control module (7, 8; 20) and the second control module (8, 9; 30) are configured in such a manner that the further interface unit (28; 28') of the first control module (7, 8; 20) and the interface unit (27; 27') of the second control module (8, 9; 30) are electrically coupled when a first side face of the first control module (7, 8; 20) is brought into contact with a second side face of the second control module (8, 9; 30).

16. The control system according to claim 14 or claim 15,
**characterized in that**
the first control module (7, 8; 20) and the second control module (8, 9; 30) each have a port (22, 23) for air to be conducted into a specimen environment, said ports being connected to enable the air to be conducted into the specimen environment to be exchanged between the first control module (7, 8; 20) and the second control module (8, 9; 30).

17. The control system according to any one of claims 11 to 16,
**characterized in that**
control variables of the plurality of control modules (7-9; 20, 30) are pairwise different.

18. The control system according to any one of claims 11 to 17,
**characterized in that**
the bus (13) is a serial bus.

19. The control system according to any one of claims 11 to 18,
**characterized in that**
a bus protocol of the bus (13) is selected from a group comprising a CAN protocol, an RS232 protocol and a USB protocol.

20. The control system according to any one of claims 11 to 19,
**characterized in that**
each control module of the plurality of control modules (7-9; 20, 30) is configured as a control module according to any one of claims 1 to 10.

21. A microscope arrangement, comprising
a microscope system (2) for observing a specimen in a specimen chamber (4), and
a control system (6) according to any one of claims 11 to 20 for influencing a plurality of specimen-environment parameters in the specimen chamber (4).

22. The microscope arrangement according to claim 21,
**characterized in that**
the microscope system (2) comprises at least one controllable component (5) which is coupled with the bus via an interface unit to receive a control command and which is configured to be actuated based on the control command.

23. The microscope arrangement according to claim 22,
**characterized in that**
the controllable component (5) is configured to ascertain whether the control command is addressed to the controllable component (3).

24. The microscope arrangement according to any one of claims 21 to 23,
**characterized in that**
a control module (7; 43) of the plurality of control modules (7-9; 43-46) has a suction opening (51; 53) for fresh air or for air from the specimen chamber (4; 42; 52).

25. The microscope arrangement according to any one of claims 21 to 24,
**characterized in that**
a control module (9; 46) of the plurality of control modules (7-9; 43-46) is connected to the specimen chamber (4) via an air supply (49) to conduct air into a specimen environment.

26. The microscope arrangement according to any one of claims 21 to 25,
**characterized in that**
the microscope arrangement comprises an electronic computer system (12) which is coupled with the bus (13) and is configured to output the control command via the bus (13).

27. A method of controlling a microscope arrangement (1) having a microscope system (2) that has an controllable component (5) and having a control module (7-9) for influencing a specimen-environment parameter of a specimen chamber (4) of the microscope system (2) using an electronic computer system (12), the method comprising the steps of:
generating a microscope control command to control the controllable component (5), the microscope control command being provided with address information for the controllable component (5),
generating a module control command to control the control module (7-9), the module control command being provided with address information for the control module (7-9), and
outputting the microscope control command and the module control command to control the controllable component and the control module (7-9),
wherein
the control module (7-9) receives the module control command over an interface unit (27; 27') of the control module (7-9),
the control module (7-9) outputs the received module control command again over a further interface unit (28; 28') of the control module (7-9),
the control module (7-9) receives air to be conducted into the specimen environment via an air inlet (22),
the control module (7-9) influences the air to be conducted into the specimen environment in accordance with the module control command to influence the specimen-environment parameter, and
the control module (7-9) emits the air to be conducted into the specimen environment via an air outlet (23).

28. The method according to claim 27,
**characterized in that**
the microscope control command and the module control command are output via the same interface of the electronic computer system (12).

29. The method according to claim 27 or claim 28,
**characterized in that**
the module control command includes a target value for the specimen-environment parameter.

30. The method according to any one of claims 27 to 29,
**characterized in that**
the method comprises the steps of reading out a time-phased schedule and monitoring an elapsed time, the module control command being generated in dependence on the time-phased schedule and the elapsed time.

31. The method according to claim 30,
**characterized in that**
the microscope control command is generated in dependence on the time-phased schedule and the elapsed time.

32. The method according to any one of claims 27 to 31,
**characterized in that**
the method comprises the step of receiving an actual value of the specimen-environment parameter from the control module (7-9).

33. The method according to claim 32,
**characterized in that**
the actual value is stored by the electronic computer system (12).

34. The method according to any one of claims 27 to 33,
**characterized in that**
the method comprises the step of receiving image data from the microscope system (2).

35. A computer-program product comprising instructions which are configured such that, when executed by an electronic computer system (12) they direct the electronic computer system (12) to perform the method according to any one of claims 27 to 34.

36. The computer-program product according to claim 35,
**characterized in that**
the instructions are configured such that, when executed by the electronic computer system they enable a user to control both the microscope system (2) having the controllable component (5) and the control module (7-9) for influencing a specimen-environment parameter of the specimen chamber of the microscope system under a unified operator interface.

## Revendications

1. Module de commande destiné à influencer un paramètre d'environnement d'échantillon d'un système d'incubation, comprenant
une unité d'interface (27 ; 27') à coupler à un bus pour la réception d'une instruction de commande,
un dispositif de commande (24-26 ; 34) couplé à l'unité d'interface (27 ; 27') et prévu pour influencer le paramètre d'environnement d'échantillon en fonction de l'instruction de commande, et
une autre unité d'interface (28 ; 28') couplée à l'unité d'interface (27 ; 27') pour une réémission de l'instruction de commande reçue,
ledit module de commande (7-9 ; 20, 30) comprenant une ouverture de sortie d'air (23) pour le refoulement de l'air à conduire vers un environnement d'échantillon et étant prévu pour influencer le paramètre d'environnement d'échantillon par influence sur l'air à conduire vers l'environnement d'échantillon, et
ledit module de commande (7-9 ; 20, 30) comprenant une ouverture d'admission d'air (22) pour la réception de l'air à conduire vers l'environnement d'échantillon et un passage pour l'air, de l'ouverture d'admission d'air (22) à l'ouverture de sortie d'air (23).

2. Module de commande selon la revendication 1,
**caractérisé en ce que**
le dispositif de commande (24-26 ; 34) est prévu pour analyser l'instruction de commande et pour déterminer alors si l'instruction de commande est adressée au module de commande (7-9 ; 20, 30).

3. Module de commande selon la revendication 1 ou 2,
**caractérisé en ce que**
le dispositif de commande (24-26) est prévu pour analyser l'instruction de commande, pour déterminer une valeur de consigne pour le paramètre d'environnement d'échantillon, et comprend un moyen de mémorisation (26) pour la sauvegarde de la valeur de consigne.

4. Module de commande selon la revendication 3,
**caractérisé en ce que**
ledit module de commande (20) comprend un raccord de capteur (29) pour la réception d'une valeur effective du paramètre d'environnement d'échantillon délivrée par un capteur, le dispositif de commande (24-26) étant prévu pour sauvegarder la valeur effective dans le moyen de mémorisation (26).

5. Module de commande selon la revendication 4,
**caractérisé en ce que**
le dispositif de commande (24-26) est prévu pour émettre la valeur effective via l'unité d'interface (27 ; 27').

6. Module de commande selon l'une des revendications précédentes,
**caractérisé en ce que**
ledit module de commande (8, 9 ; 20, 30) comprend un boîtier (21), et l'ouverture d'admission d'air (22) et l'ouverture de sortie d'air (23) sont formées sur des côtés opposées du boîtier (21).

7. Module de commande selon la revendication 6,
**caractérisé en ce que**
l'ouverture d'admission d'air (22) et l'ouverture de sortie d'air (23) comprennent chacun un segment de connexion (22', 23'), les deux étant conformés de manière à être complémentaires, si bien que le segment de connexion (22') de l'ouverture d'admission d'air (22) peut être accouplé au segment de connexion (23') de l'ouverture de sortie d'air (23) d'un module de commande (30) identique.

8. Module de commande selon la revendication 6 ou la revendication 7,
**caractérisé en ce que**
l'unité d'interface (27 ; 27') est disposée sur une face, et l'autre unité d'interface (28 ; 28') sur une autre des faces opposées du boîtier (21) sur lesquelles sont ménagées l'ouverture d'admission d'air (22) et l'ouverture de sortie d'air (23).

9. Module de commande selon l'une des revendications précédentes,
**caractérisé en ce que**
l'unité d'interface comprend un segment de connexion (27') et **en ce que** l'autre unité d'interface comprend un autre segment de connexion (28'), le segment de connexion (27') et l'autre segment de connexion (28') étant conformés de manière à être complémentaires, si bien que le segment de connexion (27') de l'unité d'interface peut être accouplé à l'autre segment de connexion de l'autre unité d'interface d'un autre module de commande, lequel est prévu identique à l'autre segment de connexion (28') du module de commande.

10. Module de commande selon l'une des revendications précédentes,
**caractérisé en ce que**
le paramètre d'environnement d'échantillon est sélectionné dans un groupe comprenant la température de porte-échantillon, la température de l'air, l'humidité de l'air, la teneur en dioxyde de carbone dans l'air et la teneur d'oxygène dans l'air.

11. Système de commande permettant d'influencer une pluralité de paramètres d'environnement d'échantillon d'un système d'incubation, comprenant
un bus (13) pour la transmission d'une instruction de commande,
une pluralité de modules de commande (7-9 ; 20, 30) ayant chacun une unité d'interface (27 ; 27') couplée au bus (13) pour la réception de l'instruction de commande, chaque module de commande (7-9 ; 20, 30) de la pluralité de modules de commande comprenant un dispositif de commande (24-26 ; 34) couplé à l'unité d'interface (27 ; 27') correspondante, lequel est prévu pour influencer un paramètre d'environnement d'échantillon de la pluralité de paramètres d'environnement d'échantillon en fonction de l'instruction de commande, au moins un des modules de commande (7-9 ; 20, 30) étant réalisé comme module de commande selon l'une des revendications 1 à 10.

12. Système de commande selon la revendication 11,
**caractérisé en ce que**
le dispositif de commande (24-26) de chaque module de commande (7-9 ; 20, 30) de la pluralité de modules de commande est prévu pour analyser l'instruction de commande et pour déterminer alors si l'instruction de commande est adressée au module de commande (7-9 ; 20, 30) correspondant.

13. Système de commande selon la revendication 11 ou 12,
**caractérisé en ce qu'**
un premier module de commande (7-9 ; 20, 30) de la pluralité de modules de commande comprend une autre unité d'interface (28 ; 28'), un segment (13a, 13b, 13c) du bus (13) étant conduit de l'unité d'interface (27 ; 27') du premier module de commande (7-9 ; 20, 30) vers l'autre unité d'interface (28 ; 28') du premier module de commande (7-9 ; 20, 30) en passant par le premier module de commande (7-9 ; 20, 30).

14. Système de commande selon la revendication 13,
**caractérisé en ce que**
l'autre unité d'interface (28 ; 28') du premier module de commande (7, 8 ; 20) est électriquement couplée à l'unité d'interface (27 ; 27') d'un deuxième module de commande (8, 9 ; 30).

15. Système de commande selon la revendication 14,
**caractérisé en ce que**
le premier module de commande (7, 8 ; 20) et le deuxième module de commande (8, 9 ; 30) sont réalisés de telle manière que l'autre unité d'interface (28 ; 28') du premier module de commande (7, 8 ; 20) et l'unité d'interface (27 ; 27') du deuxième module de commande (8, 9 ; 30) sont électriquement couplées quand une première surface latérale du premier module de commande (7, 8 ; 20) est mise en contact avec une deuxième surface latérale du deuxième module de commande (8, 9 ; 30).

16. Système de commande selon la revendication 14 ou 15,
**caractérisé en ce que**
le premier module de commande (7, 8 ; 20) et le deuxième module de commande (8, 9 ; 30) présentent chacun une ouverture de passage (22, 23) pour l'air à conduire vers un environnement d'échantillon, lesdites ouvertures étant reliées pour permettre une communication de l'air à conduire vers un environnement d'échantillon entre le premier module de commande (7, 8 ; 20) et le deuxième module de commande (8, 9 ; 30).

17. Système de commande selon l'une des revendications 11 à 16,
**caractérisé en ce que**
des grandeurs de commande de la pluralité de modules de commande (7-9 ; 20, 30) sont différenciées par paires.

18. Système de commande selon l'une des revendications 11 à 17,
**caractérisé en ce que**
le bus (13) est un bus sériel.

19. Système de commande selon l'une des revendications 11 à 18,
**caractérisé en ce qu'**
un protocole du bus (13) est sélectionné dans un groupe comprenant un protocole CAN, un protocole RS232 et un protocole USB.

20. Système de commande selon l'une des revendications 11 à 19,
**caractérisé en ce que**
chaque module de commande de la pluralité de modules de commande (7-9 ; 20, 30) est réalisé comme module de commande selon l'une des revendications 1 à 10.

21. Dispositif de microscope, comprenant
un système de microscope (2) pour l'observation d'un échantillon dans un compartiment à échantillon (4), et un système de commande (6) selon l'une des revendications 11 à 20, destiné à influencer une pluralité de paramètres d'environnement d'échantillon dans le compartiment à échantillon (4).

22. Dispositif de microscope selon la revendication 21,
**caractérisé en ce que**
le système de microscope (2) comprend au moins un composant (5) pouvant être commandé, lequel est couplé au bus (13) par une unité d'interface pour recevoir une instruction de commande, et est prévu pour être activé sur la base de l'instruction de commande.

23. Dispositif de microscope selon la revendication 22,
**caractérisé en ce que**
le composant (5) pouvant être commandé est prévu pour déterminer si l'instruction de commande est adressée au composant (3) pouvant être commandé.

24. Dispositif de microscope selon l'une des revendications 21 à 23,
**caractérisé en ce qu'**
un module de commande (7 ; 43) de la pluralité de modules de commande (7-9 ; 43-46) présente une ouverture d'aspiration (51 ; 53) pour l'air frais ou pour l'air du compartiment à échantillon (4 ; 42 ; 52).

25. Dispositif de microscope selon l'une des revendications 21 à 24,
**caractérisé en ce qu'**
un module de commande (9 ; 46) de la pluralité de modules de commande (7-9 ; 43-46) est reliée au compartiment à échantillon (4) par une conduite d'amenée d'air (49), pour conduire l'air vers un environnement d'échantillon.

26. Dispositif de microscope selon l'une des revendications 21 à 25,
**caractérisé en ce que**
ledit dispositif de microscope comprend un système de calculateur électronique (12), lequel est couplé au bus (13) et est prévu pour émettre l'instruction de commande via le bus (13).

27. Procédé de commande d'un dispositif de microscope (1) avec un système de microscope (2) comportant un composant (5) pouvant être commandé, et avec un module de commande (7-9) destiné à influencer un paramètre d'environnement d'échantillon d'un compartiment à échantillon (4) du système de microscope (2) avec un système de calculateur électronique (12), comprenant les étapes suivantes :
génération d'une instruction de commande de microscope pour la commande du composant (5) pouvant être commandé, ladite instruction de commande de microscope étant pourvue d'une information d'adresse pour le composant (5) pouvant être commandé,
génération d'une instruction de commande de module pour la commande du module de commande (7-9), ladite instruction de commande de module étant pourvue d'une information d'adresse pour le module de commande (7-9), et
émission de l'instruction de commande de microscope et de l'instruction de commande de module, pour commander le composant (5) pouvant être commandé et le module de commande (7-9),
le module de commande (7-9) recevant l'instruction de commande de module par une unité d'interface (27 ; 27') du module de commande (7-9),
le module de commande (7-9) réémettant l'instruction de commande de module via une autre unité d'interface (28 ; 28'),
le module de commande (7-9) recevant l'air à conduire vers l'environnement d'échantillon par une ouverture d'admission d'air (22),
le module de commande (7-9) influençant l'air à conduire vers l'environnement d'échantillon pour influencer le paramètre d'environnement d'échantillon en fonction de l'instruction de commande de module, et
le module de commande (7-9) refoulant l'air à conduire vers l'environnement d'échantillon par une ouverture de sortie d'air (23).

28. Procédé selon la revendication 27,
**caractérisé en ce que**
l'instruction de commande de microscope et l'instruction de commande de module sont émises via la même interface du système de calculateur électronique (12).

29. Procédé selon la revendication 27 ou 28,
**caractérisé en ce que**
l'instruction de commande de module comprend une valeur de consigne pour le paramètre d'environnement d'échantillon.

30. Procédé selon l'une des revendications 27 à 29,
**caractérisé en ce que**
ledit procédé comprend les étapes de lecture d'un plan de déroulement temporel et de surveillance d'un temps d'exécution, l'instruction de commande de module étant générée en fonction du plan de déroulement temporel et du temps d'exécution.

31. Procédé selon la revendication 30,
**caractérisé en ce que**
l'instruction de commande de microscope est générée en fonction du plan de déroulement temporel et du temps d'exécution.

32. Procédé selon l'une des revendications 27 à 31,
**caractérisé en ce que**
ledit procédé comprend l'étape de réception d'une valeur effective du paramètre d'environnement d'échantillon émise par le module de commande (7-9).

33. Procédé selon la revendication 32,
**caractérisé en ce que**
la valeur effective est sauvegardée par le système de calculateur électronique (12).

34. Procédé selon l'une des revendications 27 à 33,
**caractérisé en ce que**
ledit procédé comprend l'étape de réception de données d'image du système de microscope (2).

35. Produit à programme informatique, comprenant des instructions prévues de manière à permettre l'exécution du procédé selon l'une des revendications 27 à 34 par un système de calculateur électronique (12) lors d'une exécution des instructions par le système de calculateur électronique (12).

36. Produit à programme informatique selon la revendication 35,
**caractérisé en ce que**
les instructions sont prévues de manière à permettre à un utilisateur de commander sous une surface de commande unitaire, lors de l'exécution par le système de calculateur électronique, le système de microscope (2) avec le composant (5) pouvant être commandé ainsi que le module de commande (7-9) destiné à influencer un paramètre d'environnement d'échantillon du compartiment à échantillon du système de microscope.
